(19) Europäisches Patentamt / European Patent Office / Office européen des brevets

(11) **EP 2 826 051 B1**

(12) # FASCICULE DE BREVET EUROPEEN

(45) Date de publication et mention
de la délivrance du brevet:
**20.01.2016 Bulletin 2016/03**

(21) Numéro de dépôt: **13715314.4**

(22) Date de dépôt: **14.03.2013**

(51) Int Cl.:
*H01H 33/22* (2006.01)      *H01B 3/56* (2006.01)
*H02B 13/055* (2006.01)

(86) Numéro de dépôt international:
**PCT/FR2013/050526**

(87) Numéro de publication internationale:
**WO 2013/136015 (19.09.2013 Gazette 2013/38)**

(54) **MELANGE D'HYDROFLUOROOLEFINE ET D'HYDROFLUOROCARBURE POUR AMELIORER LA TENUE A L'ARC INTERNE DANS LES APPAREILS ELECTRIQUES MOYENNE ET HAUTE TENSION**

MISCHUNG AUS EINEM HYDROFLUOROLEFIN UND EINEM HYDROFLUORKOHLENSTOFF ZUR VERBESSERUNG DER INTERNEN LICHTBOGENRESISTENZ IN ELEKTRISCHEN MITTEL- UND HOCHSPANNUNGSVORRICHTUNGEN

MIXTURE OF A HYDROFLUOROOLEFIN AND HYDROFLUOROCARBON FOR IMPROVING INTERNAL ARC RESISTANCE IN MEDIUM- AND HIGH-VOLTAGE ELECTRICAL APPARATUSES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.03.2012 FR 1200802**

(43) Date de publication de la demande:
**21.01.2015 Bulletin 2015/04**

(73) Titulaire: **Schneider Electric Industries SAS**
**92500 Rueil-Malmaison (FR)**

(72) Inventeurs:
• **PICCOZ, Daniel**
**F-38050 Grenoble Cedex 09 (FR)**

• **MALADEN, Romain**
**F-38050 Grenoble Cedex 09 (FR)**
• **FERREIRA DA COSTA, Manuel**
**F-38050 Grenoble Cedex 09 (FR)**

(74) Mandataire: **Péru, Laurence**
**Schneider Electric Industries SAS**
**Service Propriété Industrielle**
**WTC 388EE1**
**5 Place Robert Schuman**
**38050 Grenoble Cedex 09 (FR)**

(56) Documents cités:
**DE-U1-202009 009 305      US-A1- 2008 135 817**
**US-A1- 2009 095 717**

**Description**

**DOMAINE TECHNIQUE**

La présente invention se rapporte au domaine de l'isolation électrique et de l'extinction des arcs électriques dans des appareils moyenne tension.

Plus précisément, elle se rapporte à l'utilisation d'un mélange comprenant un alcène particulier, à savoir une hydrofluorooléfine à trois atomes de carbone, et un hydrofluorocarbure, appelé également hydrofluorocarbone, en tant que milieu d'isolation et/ou d'extinction d'arc dans des appareils électriques de sous-station haute ou moyenne tension. Le mélange peut comprendre d'autres gaz dont le potentiel de réchauffement global est très faible, notamment inférieur ou égal à un.

Elle se rapporte également à des appareils électriques de sous-station de moyenne ou haute tension dans lesquels l'isolation électrique et/ou l'extinction d'arc électrique sont assurées par un mélange gazeux comprenant au moins un hydrofluorocarbone et une hydrofluorooléfine.

Un tel appareil électrique peut notamment être un transformateur électrique tel qu'un transformateur d'alimentation ou de mesure, une ligne à isolation gazeuse pour le transport ou la distribution de l'électricité, un jeu de barres ou encore un appareil électrique de connexion/déconnexion (aussi appelé appareil de coupure) tel qu'un disjoncteur, un interrupteur, un combiné interrupteur-fusibles, un sectionneur, un sectionneur de mise à la terre ou un contacteur.

**ÉTAT DE LA TECHNIQUE ANTÉRIEURE**

Dans les appareils électriques moyenne tension MT (par exemple : tension supérieure à 1 000 volts en courant alternatif et à 1 500 volts en courant continu, et inférieure à 52 000 volts en courant alternatif et 75 000 volts en courant continu) ou haute tension HT (notamment strictement supérieure à 52 000 volts en courant alternatif et à 75 000 volts en courant continu), l'isolation électrique et, le cas échéant, l'extinction des arcs électriques sont typiquement assurées par un gaz qui est confiné à l'intérieur de leur enceinte. Actuellement, le gaz le plus souvent utilisé est l'hexafluorure de soufre ($SF_6$) : ce gaz présente une rigidité diélectrique relativement haute, une bonne conductivité thermique et des pertes diélectriques peu élevées. Il est chimiquement inerte et non toxique pour l'homme et les animaux et, après avoir été dissocié par un arc électrique, il se recombine rapidement et presque totalement. De plus, il est ininflammable et son comportement, en cas de défaut interne à l'appareil, appelé communément arc interne, est proche de celui de l'air ; son prix est, encore aujourd'hui, modéré.

Toutefois, le $SF_6$ a pour inconvénient majeur de présenter un potentiel de réchauffement global (PRG) de 22 800 (relativement au $CO_2$ sur 100 ans) et une durée de séjour dans l'atmosphère de 3 200 ans, ce qui le place parmi les gaz à fort pouvoir d'effet de serre. Le $SF_6$ a donc été inscrit par le Protocole de Kyoto (1997) sur la liste des gaz dont les émissions doivent être limitées.

Le meilleur moyen de limiter les émissions du $SF_6$ consiste à limiter l'utilisation de ce gaz, ce qui a conduit les industriels à chercher des alternatives au $SF_6$. De fait, les autres solutions comme les systèmes hybrides associant une isolation gazeuse à une isolation solide (EP 1 724 802) augmentent le volume des appareils électriques par rapport à celui qu'autorise une isolation au $SF_6$ ; la coupure dans l'huile ou le vide nécessite une refonte des appareillages.

Des gaz diélectriques sont connus : voir par exemple WO 2008/073790. Cependant, les gaz dits simples comme l'air ou l'azote, qui n'ont pas d'impact négatif sur l'environnement, présentent une rigidité diélectrique beaucoup plus faible que celle du $SF_6$ ; leur utilisation pour l'isolation électrique et/ou l'extinction des arcs électriques dans des appareils HT/MT implique d'augmenter de façon drastique le volume et/ou la pression de remplissage de ces appareils, ce qui va à l'encontre des efforts qui ont été réalisés au cours de ces dernières décennies pour développer des appareils électriques compacts, à encombrement de plus en plus réduit.

Des mélanges de $SF_6$ et d'autres gaz comme l'azote ou le dioxyde d'azote sont utilisés pour limiter l'impact du $SF_6$ sur l'environnement : voir, par exemple, WO 2009/049144. Néanmoins, du fait du fort PRG du $SF_6$, le PRG de ces mélanges reste très élevé. Ainsi, par exemple, un mélange de $SF_6$ et d'azote dans un rapport volumique de 10/90 présente une rigidité diélectrique en tension alternative (50 Hz) égale à 59 % de celle du $SF_6$ mais son PRG est de l'ordre de 8 000 à 8 650. De tels mélanges ne sauraient donc être utilisés comme gaz à faible impact environnemental.

Alternativement, des gaz fluorés ont été testés : voir notamment les fluorocétones, tel que présenté dans WO 2010/142346, DE 20 2009 00935 ou FR 2 975 820. Il est cependant souhaitable de disposer d'alternatives à ces composés dont la tenue diélectrique en injection négative est assez basse. Les recherches ont mené à envisager de nouveaux gaz et mélanges de gaz qui puissent être utilisés dans les appareils électriques moyenne ou haute tension qui sont actuellement commercialisés, en lieu et place du $SF_6$ dont sont généralement remplis ces appareils, et ce sur toute la gamme de leurs températures d'utilisation, notamment à basses températures : voir par exemple FR 2 977 707 ou la demande de brevet non publiée FR 11 58456.

## EXPOSÉ DE L'INVENTION

L'invention propose ainsi une alternative pour un gaz ayant de bonnes propriétés d'isolation électrique et d'extinction des arcs électriques, un impact sur l'environnement faible ou nul, et assurant une bonne tenue à l'arc interne des appareils, et par conséquent, une bonne protection des personnes.

En particulier, l'invention concerne l'utilisation d'un milieu gazeux comprenant au moins une hydrofluorooléfine et un hydrofluorocarbone (ou hydrofluorocarbure), à chacun au moins 0,1 % et de préférence au moins 1 % en volume, comme milieu d'isolation électrique et/ou d'extinction des arcs électriques dans un appareil moyenne ou haute tension, le potentiel de réchauffement global dudit milieu étant inférieur à 90 %, de préférence à 95, ou même 99 %, du potentiel de réchauffement global (PRG) de l'hexafluorure de soufre dans les mêmes conditions de pression et température.

Les hydrofluorooléfines (HFO) utilisées sont des alcènes fluorés de chaîne carbonée à trois atomes de carbone, de préférence de type $C_3H_2F_4$ ou $C_3HF_5$, qui ne sont pas toxiques, pas corrosifs, pas explosifs, ont un potentiel de destruction de l'ozone ODP (« *Ozone Depletion Potential* » selon la terminologie anglo-saxonne) de 0, un PRG inférieur à 10. De préférence, la HFO 1234 ze est utilisée car sa décomposition en présence d'arc ne produit pas d'acide fluorohydrique.

Les hydrofluorocarbones (HFC) utilisés sont des halogénoalcanes de la famille des fluorocarbures, composés de carbone, fluor et hydrogène, qui ne sont pas toxiques, pas corrosifs, pas explosifs, avec un ODP de 0. De préférence, les hydrofluorocarbures utilisés comprennent deux ou trois atomes de carbone ; il s'agit notamment de l'heptafluoro-propane, $C_3HF_7$, communément appelé HFC-227ea ou R-227ea, du pentafluoroéthane, $C_2HF_5$, communément appelé HFC-125 ou R-125, ou du 1,1,1,2-tétrafluoroéthane, $C_2H_2F_4$, communément appele HFC-134a ou R-134a. De préférence, R-227ea est utilisé étant donné que même en présence d'oxygène, ses produits de décomposition ne comprennent pas de perfluoroisobutène PFIB.

De fait, l'ajout d'HFC aux HFO dotés de propriétés diélectriques aptes à leur faire remplacer le $SF_6$ comme gaz d'isolation et/ou d'extinction d'arc dans les appareils électriques de sous-station de haute ou moyenne tension, facilite la tenue à l'arc interne desdits appareils.

Conformément à l'invention, le mélange est tel que ses composants sont maintenus à l'état de gaz dans les conditions de température et de pression auxquelles il est destiné à être soumis une fois confiné dans l'appareil électrique. Le mélange entre hydrofluorocarbure et hydrofluorooléfine peut être ainsi utilisé seul ; toutefois, le mélange sera le plus souvent dilué avec au moins un autre gaz qui n'appartient pas à leurs familles, si la température d'ébullition ne permet pas de garantir son maintien à l'état gazeux à une pression totale suffisante pour certaines applications qui, par exemple, peuvent demander plus de $10^5$ Pa.

Dans ce cas, selon l'invention, les autres gaz utilisés dans le milieu gazeux ont un potentiel de réchauffement global inférieur ou égal à un ; le gaz vecteur, ou gaz de dilution, ou gaz tampon, présente de préférence une température d'ébullition très basse, c'est-à-dire typiquement égale ou inférieure à -50°C à la pression standard, et une rigidité diélectrique qui est au moins égale à celle que présente le dioxyde de carbone. De préférence, le mélange comprend un gaz de type air, avantageusement air sec, oxygène, dioxyde de carbone, ou un mélange de ces gaz ; alternativement, le gaz vecteur peut comprendre une fluorocétone, notamment à cinq carbones telles que $C_5F_{10}O$ pour augmenter les performances diélectriques en injection positive. Le PRG global du milieu gazeux est en rapport des pressions partielles de chacun de ses composants ; il est selon l'invention inférieur à 90 % de celui du $SF_6$, de préférence 95, ou même 99 %, par exemple de l'ordre de PRG ≤ 2000, si possible PRG ≤ 230.

Avantageusement, de manière à mettre la quantité maximale de chacun des gaz sans générer de phase liquide à la température minimale d'utilisation de l'appareil, la composition du milieu gazeux sera définie selon la loi de Raoult pour la température minimale d'utilisation de l'appareil, voire pour une température légèrement supérieure à cette dernière, notamment de 3°C. En particulier, pour un mélange ternaire hydrofluorocarbure (HFC) / hydrofluorooléfine (HFO) / gaz de dilution, les pressions de chaque constituant vérifient l'équation :

$$P_{totale} = \frac{P_{HFO} + P_{HFC}}{\dfrac{P_{HFO}}{PVS_{HFO}} + \dfrac{P_{HFC}}{PVS_{HFC}}} + P_{gaz\ dilution} \ ,$$

avec PVS = pression de vapeur saturante du gaz concerné. Plus généralement, pour un mélange de N gaz fluorés avec un gaz de dilution, les pressions partielles $P_i$ des N gaz fluorés devront vérifier l'équation :

$$P_{totale} = \frac{\sum\limits_{i=1}^{N} P_i}{\sum\limits_{i=1}^{N} \dfrac{P_i}{PVS_i}} + P_{gaz\ dilution}$$

avec $PVS_i$ = pression de vapeur saturante du gaz fluoré i.

Dans les modes de réalisation préférés, la température minimale d'utilisation $T_{min}$ est choisie parmi : 0, -5, -10, -15, -20, -25, -30, -35, et -40°C.

L'invention a également pour objet un appareil électrique de haute ou moyenne tension, qui comprend une enceinte étanche dans laquelle se trouvent des composants électriques ainsi qu'un milieu gazeux assurant l'isolation électrique et/ou l'extinction des arcs électriques au sein de cette enveloppe, ce milieu gazeux comprenant au moins une hydrofluorooléfine et un hydrofluorocarbure. Les caractéristiques du milieu gazeux sont telles que précédemment décrites à propos de son utilisation.

Conformément à l'invention, cet appareil électrique peut être un transformateur électrique à isolation gazeuse comme, par exemple, un transformateur d'alimentation ou un transformateur de mesure. L'appareil électrique peut également être une ligne à isolation gazeuse, aérienne ou souterraine, ou un jeu de barres pour le transport ou la distribution de l'électricité. Enfin, il peut aussi être un appareil électrique de connexion/déconnexion (aussi appelé appareil de coupure) comme, par exemple, un disjoncteur, un interrupteur, un sectionneur, un combiné interrupteur-fusibles, un sectionneur de mise à la terre ou un contacteur.

## EXPOSÉ DÉTAILLÉ DE MODES DE RÉALISATION PARTICULIERS

L'invention est basée sur l'utilisation, avec ou sans gaz de dilution (gaz « tampon » comme $CO_2$, air,...), avec ou sans fluorocétones, d'hydrofluorocarbures (HFC) et d'hydrofluorooléfines (HFO) à au moins trois atomes de carbone.

Les fluorocétones sont des cétones substituées par du fluor, ininflammables et de PRG très faible ; notamment les fluorocétones utilisées ont cinq atomes de carbone (C5K), avec pour formule brute $C_5F_{10}O$, et en particulier est sélectionnée la décafluoro-2-méthylbutan-3-one qui répond à la formule semi développée $CF_3$-CO-CF-$(CF_3)_2$, avec un potentiel de réchauffement global PRG = 1. Les C5K ne présentent pas de toxicité pour l'homme avec une valeur moyenne d'exposition VME (teneur limite moyenne à laquelle la majorité des travailleurs peut être exposée régulièrement à raison de 8 heures de travail pendant 5 jours par semaine, sans subir d'effet nocif) de 1 000 ppm, et une dose létale $DL_{50}$ causant la mort de 50 % d'une population animale supérieure à 200 000 ppm.

Les HFO sont des alcènes substitués par du fluor, de formule générale $C_n(H,F)_{2n}$ ; en particulier, les HFO utilisées comprennent 3 atomes de carbone ; elles sont ininflammables et leur PRG est inférieur à 10. Notamment l'hydrofluorooléfine HFO-1234ze, ou *trans*-1,3,3,3-tétrafluoro-1-propène, qui répond à la formule semi développée $CHF=CH-CF_3$, est utilisée. Son impact environnemental est PRG = 6, et elle ne présente pas de toxicité pour l'homme avec une VME = 1 000 ppm et une $DL_{50}$ > 200 000 ppm. Or dans la plupart des applications classiques à très basse température (-30°C, voire -40°C), HFO est diluée, parfois à moins de 20 %, dans un gaz vecteur neutre de type azote : le mélange n'est donc pas toxique. Les HFO-1234yf, ou 2,3,3,3-tétrafluoro-1-propène, et HFO-1225ye, ou 1,2,2,5-pentafluoro-1-propène, sont également envisagées pour le mélange selon l'invention.

Les HFC sont des halogénoalcanes de la famille des fluorocarbures. On choisira préférentiellement des HFC dont le nombre d'atomes de fluor divisé par la somme des nombres d'atomes de fluor et de d'hydrogène est le plus élevé possible, et dans tous les cas supérieur ou égal à 66 % ; par ailleurs, les HFC préférés sont non toxiques pour l'homme, ont une température d'ébullition la plus basse possible et le plus faible coût, c'est-à-dire facilement disponibles sur les différents marchés mondiaux. Bien que d'ODP nul, le PRG des HFC est supérieur à 1000 et les HFC préférés auront donc le PRG est le plus faible possible, notamment parmi :

- le heptafluoropropane de formule semi-développée $C_3HF_7$ et communément appelé HFC-227ea ou R-227ea, dont la température d'ébullition est de -16,5°C et le PRG de 3500 ;
- le pentafluoroéthane de formule semi-développée $C_2HF_5$ et communément appelé HFC-125 ou R-125, dont la température d'ébullition est de -48°C et le PRG de 3500 ;
- le 1,1,1,2-tétrafluoroéthane de formule semi-développée $C_2H_2F_4$ et communément appelé HFC-134a ou R-134a, dont la température d'ébullition est de -26,4 °C et le PRG de 1430.

Selon l'invention, le gaz diélectrique remplit des conditions environnementales strictes, avec notamment une réduction d'impact environnemental a de l'ordre de 0,10, voire 0,05 ou même 0,01, c'est-à-dire une PRG réduit de 90 %, voire 95 % ou même 99 %, par rapport à celui du $SF_6$ actuellement utilisé. En particulier, en considérant les gaz fluorés utilisés, la relation suivante est respectée :

$$\sum_i P_i \cdot M_i \cdot PRG_i \le a \cdot P_{SF_6} \cdot M_{SF_6} \cdot PRG_{SF_6}$$

avec i gaz fluoré dans le mélange selon l'invention, a réduction d'impact (inférieur à 0,10) $P_j$ pression partielle et $M_j$ masse molaire.

Selon l'invention, le mélange de HFO et HFC est utilisé sous forme gazeuse quelle que soit la température d'utilisation de l'appareillage électrique. Il convient donc que la pression partielle de chacun de ces deux composants soit inférieure ou égale à sa pression de vapeur saturante ; si le gaz vecteur comprend une fluorocétone, cette condition sera remplie également pour ladite fluorocétone. En particulier, on a

$$\sum_i \frac{P_i}{PVS_i} \le 1,$$

avec $P_i$ pression partielle, $PVS_i$ pression de vapeur saturante du gaz fluoré i.

Selon l'appareillage, la pression interne du milieu d'isolation et/ou d'extinction d'arc qui est préconisée varie ; en particulier pour différentes raisons techniques, il est intéressant d'avoir une pression totale suffisamment importante, généralement supérieure à $10^5$ Pa. Comme le mélange HFO/HFC est, selon l'invention, entièrement sous forme gazeuse à la température la plus basse de l'appareil électrique, pour remplir les conditions de pressions de remplissage données, un gaz de dilution, ou gaz tampon, est ajouté si besoin. De préférence, le gaz de dilution présente une température d'ébullition très basse, inférieure ou égale à la température minimale $T_{min}$ d'utilisation de l'appareil, et une rigidité diélectrique supérieure ou égale à celle du $CO_2$ ou de l'air dans des conditions d'essai identiques (même appareillage, même configuration géométrique, mêmes paramètres opératoires,...) à celles utilisées pour mesurer la rigidité diélectrique dudit gaz.

Le gaz de dilution peut être associé à un autre composé fluoré, et notamment une C5K pour augmenter les performances diélectriques en injection positive. Avantageusement, afin de maximiser la quantité de chacun des N gaz fluorés constituant le mélange tout en ne générant pas de phase liquide à la température minimale d'utilisation de l'appareil pour un mélange à N composés fluorés dont HFO et HFC avec un gaz de dilution, les pressions de chaque constituant seront donc définies par la formule suivante issue de la loi de Raoult :

$$P_{tot} = \frac{\sum_{i=1}^{N} P_i}{\sum_{i=1}^{N} \frac{P_i}{PVS_i}} + P_{gaz\ dilution}, \text{ avec}$$

- i ∈ {HFO, HFC, C5K} ;
- $P_{tot}$ pression de remplissage des appareils (classiquement, $P_{tot}$ = 1 à 1,5 bars en moyenne tension et $P_{tot}$ = 4 à 7 bars en haute tension) ;
- $P_i$ étant la pression du gaz concerné et $PVS_i$ sa pression de vapeur saturante ;
- les pressions étant données à la température de remplissage, soit 20°C.

Par exemple, pour un appareil moyenne tension, pour une température minimale d'utilisation $T_{min}$ =-25°C, plusieurs compositions de mélanges pourraient être utilisées pour remplir sans formation de liquide un appareillage électrique à enceinte étanche dont la pression totale de remplissage à 20 °C est de 1,45 bar, c'est-à-dire $1,45 \cdot 10^5$ Pa, notamment, pour un PRG inférieur ou égale à 1 % de celui du $SF_6$ :

- HFO 1234yf (122,9 kPa) + HFC-227ea (7,1 kPa) + $CO_2$ (15 kPa) ;
- HFO 1234yf (100,7 kPa) + HFC-134a (29,3 kPa) + $CO_2$ (15 kPa) ;
- HFO 1234ze (76 kPa) + HFC 134a (29,2 kPa) complété en $CO_2$.

Par exemple, pour un appareil haute tension, pour une température minimale d'utilisation $T_{min}$ =-30°C, plusieurs compositions de mélanges pourraient être utilisées pour remplir sans formation de liquide un appareillage électrique à enceinte 6 bar, c'est-à-dire $6,0 \cdot 10^5$ Pa, notamment le mélange HFO 1234yf (100 kPa) + HFC-227ea (10 kPa) + $CO^2$

(490 kPa) dont le PRG est égal à 1,4 % de celui du $SF_6$.

D'autres exemples peuvent être trouvés dans le tableau I ci-dessous pour une pression de 1,3 bar d'appareil électrique et un PRG inférieur à 1% du PRG du $SF_6$. Alternativement, des compositions entre HFO 1234ze et HFC 227ea pour différents PRG peuvent être trouvées dans le tableau II ci-dessous. Egalement, des compositions d'un mélange ternaire pour différentes températures peuvent être trouvées dans le tableau III ci-dessous. Tous ces exemples sont illustratifs, et donnés uniquement à titre indicatif.

**Tableau I :** exemples de compositions binaires

|  | $P_{HFC}$ (MPa) |  | $P_{HFO}$ (MPa) | $T_{min}$ (°C) |
|---|---|---|---|---|
| HFC 227ea | 0,003 | HFO 1234ze | 0,0954 | -25 |
| HFC 227ea | 0,005 | HFO 1234ze | 0,0929 | -25 |
| HFC 227ea | 0,0071 | HFO 1234ze | 0,0903 | -25 |
| HFC 134a | 0,02 | HFO 1234yf | 0,1214 | -25 |
| HFC 134a | 0,025 | HFO 1234yf | 0,1157 | -25 |
| HFC 134a | 0,0292 | HFO 1234yf | 0,1008 | -25 |
| HFC 134a | 0,02 | HFO 1234ze | 0,0834 | -25 |
| HFC 134a | 0,025 | HFO 1234ze | 0,0795 | -25 |
| HFC 134a | 0,0292 | HFO 1234ze | 0,0762 | -25 |
| HFC 227ea | 0,003 | HFO 1234ze | 0,1394 | -15 |
| HFC 227ea | 0,005 | HFO 1234ze | 0,1371 | -15 |
| HFC 227ea | 0,0071 | HFO 1234ze | 0,1346 | -15 |
| HFC 134a | 0,02 | HFO 1234yf | 0,185 | -15 |
| HFC 134a | 0,025 | HFO 1234yf | 0,1795 | -15 |
| HFC 134a | 0,0291 | HFO 1234yf | 0,1749 | -15 |
| HFC 134a | 0,02 | HFO 1234ze | 0,1352 | -15 |
| HFC 134a | 0,025 | HFO 1234ze | 0,1237 | -15 |
| HFC 134a | 0,0292 | HFO 1234ze | 0,1205 | -15 |
| HFC 227ea | 0,003 | HFO 1234ze | 0,079 | -30 |
| HFC 227ea | 0,005 | HFO 1234ze | 0,0761 | -30 |
| HFC 227ea | 0,0071 | HFO 1234ze | 0,073 | -30 |

**Tableau II:** exemples de compositions binaires HFO 1234 ze et HFC 227ea

| $T_{min}$(°C) | $P_{HFC}$ (MPa) | $P_{HFO}$ (MPa) | $PRG_{mélange}/PRG_{SF6}$ |
|---|---|---|---|
| -30 | 0,004 | 0,0775 | ≤1% |
| -30 | 0,02 | 0,0545 | ≤5% |
| -30 | 0,0362 | 0,0321 | ≤5% |
| -30 | 0,04 | 0,027 | ≤10% |
| -25 | 0,004 | 0,0941 | ≤1% |
| -15 | 0,004 | 0,1382 | ≤1% |
| -25 | 0,02 | 0,074 | ≤5% |
| -15 | 0,0362 | 0,1009 | ≤5% |

**Tableau III :** exemples de mélanges ternaires HFO 1234ze, HFC 227ea et C5K

| $P_{HFO}$ (MPa) | $P_{HFC}$ (MPa) | $P_{C5K}$ (MPa) | $T_{min}$ (°C) |
|---|---|---|---|
| 0,0183 | 0,015 | 0,01 | -25 |
| 0,0056 | 0,025 | 0,01 | -25 |
| 0,0673 | 0,015 | 0,01 | -15 |
| 0,0556 | 0,025 | 0,01 | -15 |

En particulier, un mélange a été testé dans une maquette construite à partir d'un appareil existant (Fluokit M24+) pour une application moyenne tension ; le mélange est un «-15°C», c'est-à-dire ne présentant pas de phase liquide pour des températures supérieures ou égales à -15°C. Il comprend HFO 1234zeE (122,9 kPa) + R-227ea (7,1 kPa) complété de $CO_2$ ou d'air sec (10 kPa) - les pressions étant données pour le remplissage à 20°C ; son PRG est égal à 1 % de celui du $SF_6$ avec un ODP de zéro. Le mélange présente la même tenue diélectrique mesurée par un essai diélectrique de choc de foudre que le $SF_6$ en champ homogène (lorsque le rapport du champ maximal sur le champ minimal est égal à 3) et une tenue diélectrique égale à 85 % de celle du $SF_6$ en champ très inhomogène lorsque le rapport du champ maximal sur le champ minimal est égal à 22). La tenue aux décharges partielles dudit mélange est égale à 110 % de celle du $SF_6$. Sa stabilité dans le temps sous tension et en présences de décharges partielles est très bonne. Les produits de décomposition dudit mélange après échauffement, décharges partielles, coupures sous 24 kV et défaut interne ne contiennent ni PFIB (perfluoroisobutène), ni acide fluorhydrique (HF), deux produits toxiques.

Plus généralement, l'hydrofluorooléfine utilisée est une HF 1234 combinée avec les HFC préférés: la miscibilité entre le HFO 1234ze, respectivement HFO 1234yf, et les HFC R-227ea, R-125, R-134a est parfaite. Par ailleurs, cette caractéristique se retrouve pour la fluorocétone $C_5F_{10}O$ qui peut compléter le mélange. De préférence, pour éviter les produits de décomposition toxiques, on utilise une HFO 1234ze qui ne donne pas de HF et une HFC R-227ea qui ne donne pas de PFIB.

De fait, en cas de défaut interne à l'appareil, ou en cas d'essai normatif d'arc interne sur l'appareil, la présence d'un hydrofluorocarbone HFC R-227ea ou R-125 ou R-134a permet de supprimer ou de retarder l'ignition des hydrofluorooléfines et par conséquent, de réduire l'énergie du défaut et donc d'améliorer la tenue des appareils et la protection des personnes opérant dessus. L'ajout d'une petite quantité de fluorocétone C5K, notamment 10 kPa pour un mélange de PRG $\leq$ 1 % de celui du $SF_6$ permet d'augmenter les performances en injection positive.

## Revendications

1. Utilisation d'un milieu gazeux comprenant au moins une hydrofluorooléfine à trois atomes de carbone et un hydrofluorocarbure, comme milieu d'isolation électrique et/ou d'extinction des arcs électriques dans des appareils électriques de sous-station de haute ou moyenne tension, le potentiel de réchauffement global (PRG) dudit milieu étant inférieur à 20520 relativement au $CO_2$ dans les mêmes conditions de pression et température.

2. Utilisation d'un milieu selon la revendication 1, dans laquelle l'hydrofluorooléfine est le *trans*-1,3,3,3-tétrafluoro-1-propène (HFO-1234ze), le 2,3,3,3-tétrafluoro-1-propène (HFO-1234yf), ou le 1,2,2,5-pentafluoro-1-propène (HFO-1225ye).

3. Utilisation d'un milieu selon l'une des revendications 1 ou 2 dans laquelle l'hydrofluorocarbure est le 1,1,1,2,3,3,3-heptafluoropropane (HFC-227ea), le pentafluoroéthane (HFC-125) ou le 1,1,1,2-tétrafluoroéthane (HFC-134a).

4. Utilisation d'un milieu selon l'une des revendications 1 à 3 comprenant en outre une fluorocétone, notamment la décafluoro-2-méthylbutan-3-one (C5K).

5. Utilisation d'un milieu selon l'une des revendications 1 à 4 comprenant en outre un gaz de dilution est choisi parmi l'air, l'oxygène, le dioxyde de carbone ou un mélange de ces gaz.

6. Utilisation selon l'une des revendications 1 à 5, dans laquelle les pressions partielles de l'hydroflurocarbure et de l'hydrofluorooléfine au sein du mélange sont choisies en fonction de la température minimale de l'appareillage de manière à ne pas créer de phase liquide selon la loi de Raoult à une température minimale d'utilisation de l'appareil.

**7.** Utilisation selon la revendication 6, dans laquelle la température minimale ($T_{min}$) est choisie parmi -30°C, -25°C, -15°C et 0°C.

**8.** Appareil électrique moyenne tension, comprenant une enceinte étanche dans laquelle se trouvent des composants électriques ainsi qu'un milieu gazeux assurant l'isolation électrique et/ou l'extinction des arcs électriques susceptibles de se produire au sein de cette enceinte, **caractérisé en ce que** le milieu gazeux comprend une hydrofluorooléfine à trois atomes de carbone et un hydrofluorocarbure, le potentiel de réchauffement global dudit milieu étant inférieur à 20520 relativement au $CO_2$ dans les mêmes conditions de pression et température.

**9.** Appareil électrique selon la revendication 8, dans lequel l'hydrofluorooléfine est le *trans*-1,3,3,3-tétrafluoro-1-propène (HFO-1234ze) ou le 2,3,3,3-tétrafluoro-1-propène (HFO-1234yf) ou le 1,2,2,5-pentafluoro-1-propène (HFO-1225ye), et l'hydrofluorocarbure est le 1,1,1,2,3,3,3-heptafluoropropane (HFC-227ea), le pentafluoroéthane (HFC-125) ou le 1,1,1,2-tétrafluoroéthane (HFC-134a).

**10.** Appareil électrique selon la revendication 8 ou la revendication 9, dans lequel le milieu gazeux comprend en outre un gaz de dilution.

**11.** Appareil électrique selon la revendication 10, dans lequel le gaz de dilution est choisi parmi l'air, l'oxygène, le dioxyde de carbone ou un mélange de ces gaz.

**12.** Appareil électrique selon l'une des revendications 8 à 11, dans lequel l'hydrofluorooléfine et l'hydrofluorocarbure sont présents dans le milieu avec des proportions définies selon la loi de Raoult pour ne pas créer de phase liquide à une température minimale d'utilisation de l'appareil.

**13.** Appareil électrique selon l'une des revendications 8 à 12, qui est un transformateur électrique à isolation gazeuse, une ligne à isolation gazeuse pour le transport ou la distribution de l'électricité ou un appareil électrique de connexion/déconnexion.

## Patentansprüche

**1.** Verwendung eines gasförmigen Mediums, das mindestens ein Hydrofluorolefin mit drei Kohlenstoffatomen und einen teilfluorierten Fluorkohlenwasserstoff umfasst, als elektrisches Isolationsmedium und/oder Medium zum Löschen von elektrischen Lichtbögen in elektrischen Vorrichtungen von Hoch- oder Mittelspannungsunterstationen, wobei das Treibhauspotential (GWP) des Mediums weniger als 20520 relativ zu $CO_2$ unter den gleichen Druck- und Temperaturbedingungen beträgt.

**2.** Verwendung eines Mediums nach Anspruch 1, wobei es sich bei dem Hydrofluorolefin um trans-1,3,3,3-Tetrafluor-1-propen (HFO-1234ze), 2,3,3,3-Tetrafluor-1-propen (HFO-1234yf) oder 1,2,2,5-Pentafluor-1-propen (HFO-1225ye) handelt.

**3.** Verwendung eines Mediums nach Anspruch 1 oder 2, wobei es sich bei dem teilfluorierten Fluorkohlenwasserstoff um 1,1,1,2,3,3,3-Heptafluorpropan (H-FKW 227ea), Pentafluorethan (H-FKW 125) oder 1,1,1,2-Tetrafluorethan (H-FKW 134a) handelt.

**4.** Verwendung eines Mediums nach einem der Ansprüche 1 bis 3, außerdem umfassend ein Fluorketon, insbesondere Decafluor-2-methylbutan-3-on (C5K).

**5.** Verwendung eines Mediums nach einem der Ansprüche 1 bis 4, außerdem umfassend ein Verdünnungsgas, das aus Luft, Sauerstoff, Kohlendioxid oder einer Mischung dieser Gase ausgewählt ist.

**6.** Verwendung nach einem der Ansprüche 1 bis 5, wobei die Partialdrücke des teilfluorierten Fluorkohlenwasserstoffs und des Hydrofluorolefins in der Mischung in Abhängigkeit von der Minimaltemperatur der Einrichtung so gewählt sind, dass sich gemäß dem Raoultschen Gesetz bei einer minimalen Verwendungstemperatur der Vorrichtung keine flüssige Phase bildet.

**7.** Verwendung nach Anspruch 6, wobei die Minimaltemperatur ($T_{min}$) aus -30°C, -25°C, -15°C und 0°C ausgewählt ist.

8. Elektrische Mittelspannungsvorrichtung, umfassend eine dichte Kammer, in der sich elektrische Komponenten sowie ein gasförmiges Medium, das die elektrische Isolation und/oder Löschung von Lichtbögen, die in dieser Kammer entstehen können, sicherstellt, befinden, **dadurch gekennzeichnet, dass** das gasförmige Medium ein Hydrofluorolefin mit drei Kohlenstoffatomen und einen teilfluorierten Fluorkohlenwasserstoff umfasst, wobei das Treibhauspotential des Mediums weniger als 20520 relativ zu $CO_2$ unter den gleichen Druck- und Temperaturbedingungen beträgt.

9. Elektrische Vorrichtung nach Anspruch 8, wobei es sich bei dem Hydrofluorolefin um trans-1,3,3,3-Tetrafluor-1-propen (HFO-1234ze), 2,3,3,3-Tetrafluor-1-propen (HFO-1234yf) oder 1,2,2,5-Pentafluor-1-propen (HFO-1225ye) handelt und es sich bei dem teilfluorierten Fluorkohlenwasserstoff um 1,1,1,2,3,3,3-Heptafluorpropan (H-FKW 227ea), Pentafluorethan (H-FKW 125) oder 1,1,1,2-Tetrafluorethan (H-FKW 134a) handelt.

10. Elektrische Vorrichtung nach Anspruch 8 oder Anspruch 9, wobei das gasförmige Medium außerdem ein Verdünnungsgas umfasst.

11. Elektrische Vorrichtung nach Anspruch 10, wobei das Verdünnungsgas aus Luft, Sauerstoff, Kohlendioxid oder einer Mischung dieser Gase ausgewählt ist.

12. Elektrische Vorrichtung nach einem der Ansprüche 8 bis 11, wobei das Hydrofluorolefin und der teilfluorierte Fluorkohlenwasserstoff in dem Medium in solchen gemäß dem Raoultschen Gesetz definierten Anteilen vorliegen, dass sich bei einer minimalen Verwendungstemperatur der Vorrichtung keine flüssige Phase bildet.

13. Elektrische Vorrichtung nach einem der Ansprüche 8 bis 12, bei der es sich um einen Transformator mit Gasisolation, eine Leitung mit Gasisolation zum Transport oder zur Verteilung von Elektrizität oder eine elektrische Einschaltungs- oder Abschaltungsvorrichtung handelt.

**Claims**

1. Use of a gas medium comprising at least one hydrofluoroolefin with three carbon atoms and one hydrofluorocarbon, as electrical insulation medium and/or medium for extinguishing electrical arcs in high or medium voltage substation electrical apparatuses, the global warming potential (GWP) of said medium being less than 20520 relative to $CO_2$ in the same pressure and temperature conditions.

2. Use of a medium according to Claim 1, in which the hydrofluoroolefin is trans-1,3,3,3-tetrafluoro-1-propene (HFO-1234ze), 2,3,3,3-tetrafluoro-1-propene (HFO-1234yf) or 1,2,2,5-pentafluoro-1-propene (HFO-1225ye).

3. Use of a medium according to one of Claims 1 and 2, in which the hydrofluorocarbon is 1,1,1,2,3,3,3-heptafluoropropane (HFC-227ea), pentafluoroethane (HFC-125) or 1,1,1,2-tetrafluoroethane (HFC-134a).

4. Use of a medium according to one of Claims 1 to 3, further comprising a fluoroketone, notably decafluoro-2-methylbutan-3-one (C5K).

5. Use of a medium according to one of Claims 1 to 4, also comprising a dilution gas chosen from air, oxygen, carbon dioxide or a mixture of these gases.

6. Use according to one of Claims 1 to 5, in which the partial pressures of the hydrofluorocarbon and of the hydrofluoroolefin in the mixture are chosen as a function of the minimum temperature of the switchgear so as not to create liquid phase according to Raoult's law at a minimum temperature of use of the apparatus.

7. Use according to Claim 6, in which the minimum temperature (Tmin) is chosen from -30°C, -25°C, -15°C and 0°C.

8. Medium voltage electrical apparatus, comprising a sealed chamber containing electrical components and a gas medium ensuring the electrical insulation and/or the extinguishing of electrical arcs likely to occur in this chamber, **characterized in that** the gas medium comprises a hydrofluoroolefin with three carbon atoms and a hydrofluorocarbon, the global warming potential of said medium being less than 20520 relative to $CO_2$ in the same pressure and temperature conditions.

9.  Electrical apparatus according to Claim 8, wherein the hydrofluoroolefin is trans-1,3,3,3-tetrafluoro-1-propene (HFO-1234ze) or 2,3,3,3-tetrafluoro-1-propene (HFO-1234yf) or 1,2,2,5-pentafluoro-1-propene (HFO-1225ye), and the hydrofluorocarbon is 1,1,1,2,3,3,3-heptafluoropropane (HFC-227ea), pentafluoroethane (HFC-125) or 1,1,1,2-tetrafluoroethane (HFC-134a).

10. Electrical apparatus according to Claim 8 or Claim 9, wherein the gas medium also comprises a dilution gas.

11. Electrical apparatus according to Claim 10, wherein the dilution gas is chosen from air, oxygen, carbon dioxide or a mixture of these gases.

12. Electrical apparatus according to one of Claims 8 to 11, wherein the hydrofluoroolefin and the hydrofluorocarbon are present in the medium with proportions defined according to Raoult's law so as not to create liquid phase at a minimum temperature of use of the apparatus.

13. Electrical apparatus according to one of Claims 8 to 12, which is an electrical transformer with gas insulation, a line with gas insulation for transporting or distributing electricity or a connecting/disconnecting electrical apparatus.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1724802 A
- WO 2008073790 A
- WO 2009049144 A
- WO 2010142346 A
- DE 20200900935
- FR 2975820
- FR 2977707
- FR 1158456